# FASCICULE DE BREVET EUROPEEN

(11) **EP 0 515 245 B1**
(45) Date de publication et mention de la délivrance du brevet: **12.04.1995**
(21) Numéro de dépôt: 92401305.5
(22) Date de dépôt: 13.05.1992
(51) Int. Cl.: A47J 31/06

(54) **Filtre pour extraction rapide par un liquide sous pression des substances aromatiques d'un produit, et appareil comportant un tel filtre**
Filter für die schnelle Extraktion von aromatischen Substanzen eines Produkts mit einer Flüssigkeit unter Druck sowie Vorrichtung mit einem solchen Filter
Filter for quick extraction of aromatic substances of a product by a liquid under pressure and apparatus with such a filter

(30) Priorité: 22.05.1991 FR 9106149
(43) Date de publication de la demande: 25.11.1992
(73) Titulaire: SEB S.A., 69130 Ecully (FR)
(72) Inventeur: Combe, Daniel, F-01480 Fareins (FR)

(56) Documents cités:
- DE-A- 1 454 162
- DE-A- 3 035 157
- FR-A- 2 636 828

## Description

La présente invention concerne un filtre pour extraction rapide par un liquide sous pression des substances aromatiques d'un produit.

La présente invention concerne également un appareil comportant un tel filtre.

On a décrit dans la demande de brevet français n° 89 16 469 au nom de la demanderesse un appareil pour la préparation de boissons par extraction rapide des substances aromatiques consommables d'un produit soumis à un liquide sous pression, comprenant un injecteur de liquide sous pression débouchant dans un récipient contenant le produit à traiter, le fond du récipient de traitement étant pourvu d'au moins un orifice coopérant avec des moyens d'obturation élastique qui dégagent au moins partiellement l'orifice pour laisser passer l'extrait lorsqu'une certaine pression est atteinte dans le récipient de traitement, sur un passage suffisamment étroit pour assurer la filtration du liquide qui a été en contact avec le produit à traiter.

Lorsque le produit à traiter est de la mouture de café que l'on traite avec de l'eau très chaude sous pression pour obtenir un café dit "expresso", on réalise en une seule étape les trois opérations d'extraction des substances aromatiques, de filtration de la mouture pour ne laisser passer que l'extrait de café, et de production de mousse particulièrement appréciée par les consommateurs.

Toutefois les moyens particuliers décrits dans ce document antérieur peuvent présenter certains problèmes de fiabilité dans le temps.

La présente invention a pour but de remédier aux inconvénients de l'appareil décrit ci-dessus, et de proposer pour un tel appareil un filtre qui permette d'effectuer en une seule étape les trois opérations précitées, qui soit facile à réaliser et qui ait un fonctionnement particulièrement fiable dans le temps.

Le filtre visé par l'invention est un filtre pour la préparation de boissons par extraction rapide par un liquide sous pression des substances aromatiques solubles d'un produit contenu dans un récipient de traitement dont le fond est obturé par ce filtre, ledit filtre comportant au moins un orifice coopérant avec des moyens d'obturation élastiques qui, lorsqu'une certaine pression dudit liquide est atteinte dans le récipient, dégagent ledit orifice sur un passage suffisamment étroit pour assurer la filtration du liquide qui a été en contact avec ledit produit.

Suivant l'invention, ce filtre est caractérisé en ce que les moyens d'obturation élastiques sont constitués par au moins une languette élastique fixée au filtre et obturant sensiblement ledit orifice.

Une languette élastique est capable de réaliser le but précité de l'invention.

Suivant une version avantageuse de l'invention, le filtre comporte plusieurs languettes réparties régulièrement sur celui-ci et s'étendant radialement, chaque languette étant découpée dans l'épaisseur du filtre et restant fixée à celui-ci par sa base côté centre du filtre.

La réalisation du filtre de l'invention est donc une opération simple et peu onéreuse.

Suivant une version préférée de l'invention, le filtre a la forme d'un disque circulaire en acier inoxydable, et les languettes sont identiques et sont disposées régulièrement autour du centre du disque et à égale distance de celui-ci.

Un tel filtre a, de par sa nature et sa structure, un fonctionnement très fiable aux températures et aux pressions mises en jeu.

D'autres particularités et avantages de l'invention apparaîtront dans la description détaillée ci-après.

Aux dessins annexés, donnés uniquement à titre d'exemples non limitatifs:
- la figure 1 est une vue en coupe longitudinale d'une poignée porte-filtre de machine à café "expresso" comportant un filtre conforme à l'invention;
- la figure 2 est une vue éclatée agrandie du porte-filtre et du filtre représentés à la figure 1;
- la figure 3 est une vue de dessus du filtre de la figure 2;
- la figure 4 est une vue partielle agrandie en coupe selon IV-IV à la figure 3;
- la figure 5 est une vue partielle agrandie en coupe selon V-V à la figure 3;
- la figure 6 est une vue agrandie d'une partie de la figure 3.

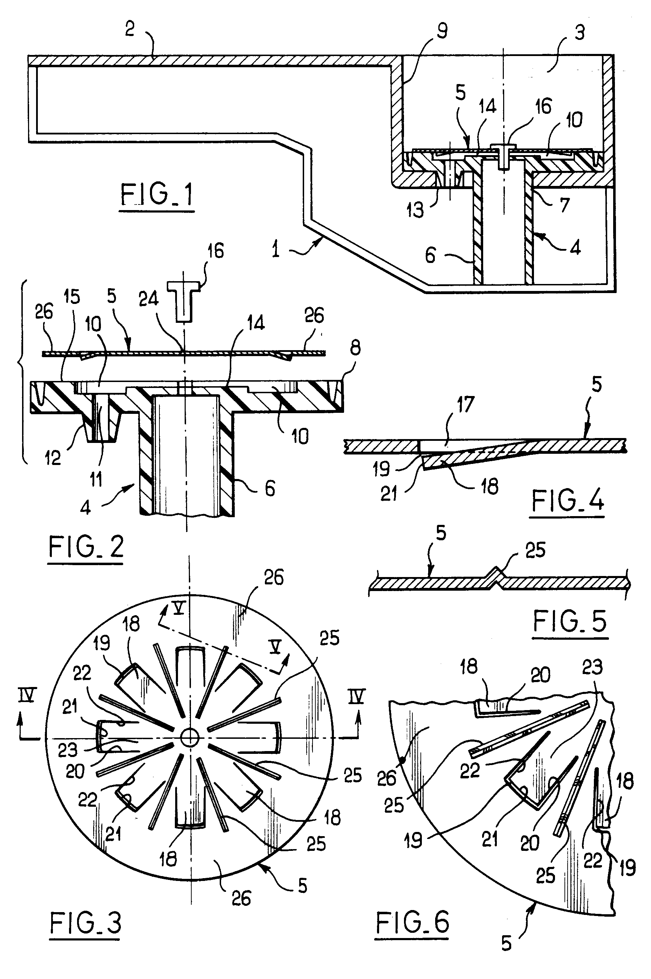

Dans la réalisation représentée à la figure 1, une poignée 1 pour cafetière ou machine à café "expresso" comporte un manche 2 et un récipient de traitement 3 contenant un porte-filtre 4 qui supporte un filtre 5 destiné à retenir la mouture de café.

La poignée 1 est d'un type connu quelconque qui n'a pas besoin d'être décrit en détail ici, et comporte notamment des moyens (non représentés) pour sa fixation de manière étanche sur la cafetière ou machine à café (non représentée), par exemple des excroissances radiales susceptibles de venir en prise par rotation avec une rainure en pas de vis de ladite cafetière ou machine à café.

Comme représenté en détail à la figure 2, le porte-filtre 4 est du type mobile pour pouvoir être enlevé du récipient 3 pour nettoyage, ou pour pouvoir être propulsé, par un mécanisme à ressort connu en lui-même et non représenté, logé par exemple dans le manche 2, jusqu'à la partie supérieure du récipient 3 pour permettre une élimination facile de la mouture de café usagée.

Le porte-filtre 4 comporte ainsi un fût central 6 de guidage coulissant librement dans une ouverture correspondante 7 ménagée dans le fond du récipient 3. Il comporte également une lèvre périphérique 8 destinée à réaliser l'étanchéité avec la paroi périphérique intérieure 9 du récipient 3.

Le porte-filtre 4 présente sur sa face supérieure qui reçoit le filtre 5 et la mouture de café, une gorge annulaire 10 destinée à recueillir l'extrait de café. La gorge 10 communique avec un trou de passage 11 ménagé dans une tubulure 12 du porte-filtre 4 qui traverse une ouverture 13 du fond du récipient 3, afin de permettre l'acheminement de l'extrait de café vers une tasse (non représentée) située sous la poignée 1.

Le porte-filtre 4 présente également, sur sa face supérieure, une partie centrale 14 radialement intérieure par rapport à la gorge annulaire 10, en saillie par rapport à cette gorge 10 mais évidée par rapport à la partie périphérique 15 du porte-filtre.

Comme on le voit aux figures 1 et 2, le filtre 5 repose par sa couronne périphérique 26 sur la partie périphérique 15 du porte-filtre 4, et est fixé en son centre à celui-ci par une vis 16 qui le maintient sur le porte-filtre 4 sans le déformer et sans le serrer sur la partie centrale 14 de celui-ci.

D'une manière générale, le filtre 5 est un filtre pour la préparation de boissons par extraction rapide, par un liquide sous pression, des substances aromatiques solubles d'un produit contenu dans le récipient de traitement 3 dont le fond est obturé par ce filtre 5.

Le filtre 5 comporte plusieurs orifices 17 coopérant avec des moyens d'obturation élastiques 18 qui, lorsqu'une certaine pression dudit liquide est atteinte dans le récipient 3, dégagent chacun de ces orifices 17 sur un passage 19 suffisamment étroit pour assurer la filtration du liquide qui a été en contact avec ledit produit. Dans l'exemple décrit et représenté d'une cafetière ou machine à café "expresso", on met de la mouture de café au-dessus du filtre 5 dans le récipient 3 et on envoie de l'eau très chaude sous pression sur cette mouture pour préparer un café "expresso".

Comme représenté en détail aux figures 3 à 6, le filtre 5 est un élément mince en un matériau flexible résistant aux conditions de température, de pression et d'environnement de son utilisation, tel que de l'acier inoxydable; il a une forme circulaire.

Le filtre 5 comporte huit languettes 18 allongées sensiblement rectangulaires réparties régulièrement autour du centre 24 du filtre à égale distance de ce centre.

Chaque languette 18 est découpée par cisaillage sur trois côtés 20, 21, 22, dans l'épaisseur du filtre 5 et reste fixée à celui-ci par sa base 23. Les languettes 18 s'étendent radialement vers l'extérieur et restent attachées au filtre 5 par leur base 23 côté centre 24 de celui-ci.

Chaque languette 18 ménage dans le filtre 5 un orifice 17 qu'elle obture sensiblement et de manière élastique.

Le filtre 5 est par exemple un disque d'acier inoxydable d'épaisseur 0,3 mm pour un rayon de 25 mm environ. Lors du cisaillage, chaque languette 18 se déforme et reste légèrement pliée, de sorte qu'il subsiste une étroite fente 19 qui peut varier de 0 à 0,2 mm.

Les languettes 18 ont leur côté 21 opposé à leur base sensiblement sur un même cercle de rayon 15 mm environ. Leurs côtés sensiblement radiaux 20 et 22 sont écartés de 5 mm environ. Ainsi, les bords radiaux adjacents 20, 22 de deux languettes 18 adjacentes sont suffisamment proches l'un de l'autre pour permettre aux parties non découpées du filtre 5 d'accuser une certaine déformation sous l'effet de la pression que l'eau et la mouture exercent lors de l'extraction du café.

Des nervures de raidissement radiales 25, ménagées respectivement dans les parties du filtre 5 situées entre les languettes 18, et obtenues par emboutissage du métal, rigidifient le filtre 5.

Le fonctionnement du filtre conforme à l'invention que l'on vient de décrire est le suivant.

Sous l'effet de la pression exercée par l'eau chaude et la mouture lors de l'extraction, le filtre 5 se déforme de telle sorte que sa partie centrale s'abaisse jusqu'à toucher la partie centrale 14 du porte-filtre 4 alors que sa couronne périphérique 26 reste en appui sur la partie périphérique 15 de celui-ci. Les languettes 18 subissent elles-mêmes une flexion. L'ensemble de ces déformations fait que les fentes 19 laissent filtrer un plus ou moins grand débit d'extrait de café en fonction de la pression d'injection de l'eau, tout en retenant les particules de café moulu. Les fentes 19 se referment ensuite dès que la pression cesse. Ce mouvement des languettes 18 assure l'auto-nettoyage des fentes de filtration 19.

Le filtre de l'invention est utilisable avec un porte-filtre quelconque, fixe ou mobile, porté par une poignée comme décrit ci-dessus ou monté d'une autre manière quelconque dans le corps de la machine.

De même, le filtre de l'invention peut être utilisé avec d'autres produits que du café, par exemple avec du thé.

Le forme rectangulaire des languettes n'est pas impérative. Elles peuvent être trapézoïdales, triangulaires, voire circulaires (en croissant gibbeux).

Le nombre de languettes peut être quelconque; la disposition de celles-ci peut se faire selon un cercle ou plusieurs cercles concentriques.

Les languettes peuvent avoir une direction autre que radiale sur le filtre.

## Revendications

1. Filtre pour la préparation de boissons par extraction rapide par un liquide sous pression des substances aromatiques solubles d'un produit contenu dans un récipient de traitement (3) dont le fond est obturé par ce filtre, ledit filtre (5) comportant au moins un orifice (17) coopérant avec des moyens d'obturation élastiques (18) qui, lorsqu'une certaine pression dudit liquide est atteinte dans le récipient (3), dégagent ledit orifice (17) sur un passage (19) suffisamment étroit pour assurer la filtration du liquide qui a été en contact avec ledit produit, caractérisé en ce que les moyens d'obturation élastiques (18) sont constitués par au moins une languette élastique (18) fixée au filtre (5) et obturant sensiblement ledit orifice (17).

2. Filtre conforme à la revendication 1, caractérisé en ce qu'il comporte plusieurs languettes (18) réparties régulièrement sur celui-ci.

3. Filtre conforme à l'une des revendications 1 ou 2, caractérisé en ce que chaque languette (18) est découpée dans l'épaisseur du filtre (5) et reste fixée à celui-ci par sa base (23).

4. Filtre conforme à l'une des revendications 1 à 3, caractérisé en ce que les languettes (18) s'étendent radialement.

5. Filtre conforme à la revendication 4, caractérisé en ce que les languettes (18) restent attachées au filtre (5) par leur base (23) côté centre du filtre (5).

6. Filtre conforme à l'une quelconque des revendications 1 à 5, caractérisé en ce qu'il est constitué par un élément mince en matériau flexible.

7. Filtre conforme à la revendication 6, caractérisé en ce qu'il a la forme d'un disque circulaire (5) et en ce que les languettes (18) sont identiques et sont disposées régulièrement autour du centre (24) du disque (5) à égale distance de celui-ci.

8. Filtre conforme à la revendication 7, caractérisé en ce qu'il est réalisé en acier inoxydable.

9. Filtre conforme à la revendication 7 ou 8, caractérisé en ce qu'il est conçu pour reposer par sa périphérie (26) sur la face supérieure d'un porte-filtre (4) qui présente sur ladite face supérieure une gorge annulaire (10) destinée à recueillir le filtrat et au-dessus de laquelle sont situées les parties mobiles des languettes (18) lorsque le filtre (5) est en position de service sur le porte-filtre (4).

10. Filtre conforme à la revendication 9, caractérisé en ce que le porte-filtre (4) présente sur sa face supérieure une partie centrale (14) radialement intérieure par rapport à la gorge annulaire (10), en saillie par rapport à cette gorge (10) mais évidée par rapport à la partie périphérique (15) du porte-filtre (4) qui porte le filtre (5), de façon à limiter la déformation de la partie centrale du filtre (5).

11. Appareil pour la préparation de boissons par extraction rapide par un liquide sous pression des substances aromatiques solubles d'un produit contenu dans un récipient de traitement (3) dont le fond est obturé par un filtre, caractérisé en ce qu'il comporte un filtre (5) conforme à l'une des revendications 1 à 10.

12. Appareil conforme à la revendication 11, caractérisé en ce que cet appareil est une cafetière électrique ou une machine à café électrique.

## Claims

1. A filter for preparing beverages by using a liquid under pressure for rapidly extracting soluble aromatic substances from matter contained in a treatment receptacle (3) having an end wall closed by said filter, the filter (5) including at least one orifice (17) cooperating with resilient closure means (18) that act, when a certain pressure of said liquid is reached in the receptacle (3), to disengage said orifice (17) over a passage (19) that is sufficiently narrow to provide filtering of the liquid that has been in contact with said matter, the filter being characterized in that the resilient closure means (18) are constituted by at least one resilient tongue (18) fixed to the filter (5) and substantially closing said orifice (17).

2. A filter according to claim 1, characterized in that it includes a plurality of tongues (18) regularly distributed thereover.

3. A filter according to claim 1 or 2, characterized in that each tongue (18) is cut out in the thickness of the filter (5) and remains connected thereto via its base (23).

4. A filter according to any one of claims 1 to 3, characterized in that the tongues (18) extend radially.

5. A filter according to claim 4, characterized in that the tongues (18) remain attached to the filter (5) via their bases (23) at their ends closer to the center of the filter (5).

6. A filter according to any one of claims 1 to 5, characterized in that it is constituted by a thin element of flexible material.

7. A filter according to claim 6, characterized in that it is in the form of a circular disk (5), and in that the tongues (18) are identical and are regularly disposed around the center (24) of the disk (5) and at the same distance therefrom.

8. A filter according to claim 7, characterized in that it is made of stainless steel.

9. A filter according to claim 7 or 8, characterized in that it is designed to rest via its periphery (26) on the top face of a filter-carrier (4) which has an annular groove (10) in said top face designed to recover the filtrate, and above which the moving portions of the tongues (18) are disposed when the filter (5) is in its working position on the filter-carrier (4).

10. A filter according to claim 9, characterized in that the top face of the filter-carrier (4) has a central portion (14) radially inside the annular groove (10), that projects relative to said groove (10) but that is set back relative to the peripheral portion (15) of the filter-carrier (4) that caries the filter (5), thereby limiting deformation of the central portion of the filter (5).

11. An appliance for preparing beverages by using a liquid under pressure for rapidly extracting soluble aromatic substances from matter contained in a treatment receptacle (3) having an end wall closed by a filter, the appliance being characterized in that it includes a filter (5) according to any one of claims 1 to 10.

12. An appliance according to claim 11, characterized in that the appliance is an electric coffee pot or an electric coffee-making machine.

## Patentansprüche

1. Filter zur Vorbereitung von Getränken durch Schnellextraktion, mittels einer unter Druck eingelassenen Flüssigkeit, der löslichen aromatischen Stoffe aus einem Produkt in einem Verarbeitungsbehälter (3), dessen Boden vom Filter (5) abgedeckt wird, wobei der Filter (5) mit wenigstens einer mit elastischen Verschlußmitteln (18) zusammenwirkenden Durchlassöffnung (17) versehen ist, wobei die Verschlußmittel (18) bei Erreichen eines bestimmten Drucks der Flüssigkeit im Verarbeitungsbehälter (3) die Öffnung (17) zum Durchlassen des Extrakts um einen genügend engen Durchgang (19) freigeben, um die Flüssigkeit, die mit dem Produkt des zu behandelnden Produkts in Kontakt war, zu filtrieren, dadurch gekennzeichnet, daß die elastischen Verschlußmittel (18) durch wenigstens eine elastische, am Filter (5) befestigte, die Durchlassöffnung (17) annähernd verschließende Zunge (18) gebildet sind.

2. Filter nach Anspruch 1 dadurch gekennzeichnet, daß er mehrere regelmäßig verteilte Zungen (18) umfaßt.

3. Filter nach einem der Ansprüche 1 und 2 dadurch gekennzeichnet, daß die Zungen (18) aus der Materialstärke des Filters (5) herausgeschnitten sind und mit dem Filterkörper über ihre Basis (23) verbunden bleiben.

4. Filter nach einem der Ansprüche 1 bis 3 dadurch gekennzeichnet, daß sich die Zungen (18) radial erstrecken.

5. Filter nach Anspruch 4 dadurch gekennzeichnet, daß die Zungen (18) mit dem Filter (5) über ihre dem Mittelpunkt des Filters zugewandte Seite (23) verbunden bleiben.

6. Filter nach einem der Ansprüche 1 bis 5 dadurch gekennzeichnet, daß er durch ein dünnes Teil aus nachgiebigem Material gebildet ist.

7. Filter nach Anspruch 6 dadurch gekennzeichnet, daß er als Rundscheibe (5) ausgebildet ist und daß die untereinander identischen Zungen (18) um den Mittelpunkt der Scheibe (5) herum regelmäßig verteilt angeordnet sind.

8. Filter nach Anspruch 7 dadurch gekennzeichnet, daß er aus rostfreiem Stahl hergestellt ist.

9. Filter nach Anspruch 7 oder 8 dadurch gekennzeichnet, daß er so ausgebildet ist um mit seinem äußeren Umfangsbereich (26) auf der Oberseite des Filterträgers (4) aufliegt, wobei der Filterträger auf seiner Oberseite mit einer ringförmigen Umfangsnut (10) zur Aufnahme des Filtrats versehen ist und der bewegliche Teil der Zungen (18) bei in Arbeitsstellung auf dem Filterträger (4) befindlichem Filter (5) oberhalb der genannten Umfangsnut (10) angeordnet ist.

10. Filter nach Anspruch 9 dadurch gekennzeichnet, daß die Oberseite des Filterträgers (4) einen mittleren, radial innerhalb der Ringnut gelegenen, gegenüber der Ringnut (10) erhöhten, aber gegenüber dem äußeren Umfangsbereich (15) vertieften Bereich (14) aufweist, um die Verformbarkeit des mittleren Bereichs des Filters (5) zu begrenzen.

11. Gerät zur Vorbereitung von Getränken durch Schnellextraktion der löslichen aromatischen Stoffe aus einem in einem Verarbeitungsbehälter (3) befindlichen Produkt, mittels einer unter Druck eingelassenen Flüssigkeit, wobei der Boden des Behälters (3) durch einen Filter abgedeckt ist, dadurch gekennzeichnet, daß es mit einem Filter (5) gemäß den Ansprüchen 1 bis 10 ausgestattet ist.

12. Gerät nach Anspruch 11 dadurch gekennzeichnet, daß es durch eine elektrische Kaffeekanne oder Kaffeemaschine gebildet ist
